# EUROPEAN PATENT APPLICATION

(11) **EP 1 475 798 A1**
(43) Date of publication of application: **10.11.2004**
(21) Application number: 04010365.7
(22) Date of filing: 30.04.2004
(51) Int. Cl.: G11B 20/10, G11B 27/36

(54) **Data processor, data processing method, program for data processor, and program recording medium**

(30) Priority: 08.05.2003 JP 2003130106
(71) Applicant: MATSUSHITA ELECTRIC INDUSTRIAL CO., LTD., Kadoma-shi, Osaka 571-8501 (JP)
(72) Inventor: Yamashita, Kazuhiko, Soraku-gun Kyoto-fu 619-0238 (JP)
(74) Representative: Gassner, Wolfgang

(57) **Abstract**

A data processor and a data processing method allowing a plurality of data processes to be simultaneously performed at a high transfer rate use efficiency are provided. When a transfer rate *x* required for the plurality of data processes to be simultaneously performed exceeds a maximum transfer rate *y* of a recording medium (13), a transfer rate control section (16) selects a data process having a low priority, and changes a transfer rate assigned to the selected data process so that the required transfer rate x is within the maximum transfer rate y. The changed transfer rate is reported to the data writing section (12) for performing a writing process on the recording medium (13) or to the data reading section (14) for performing a reading process on the recording medium (13).

## Description

### BACKGROUND OF THE INVENTION

### Field of the Invention

The present invention relates to data processors, data processing methods, programs for data processors, and program recording mediums. More specifically, the present invention relates to a data processor for performing a digital data recording process and/or a digital data playback process on a recording medium, such as a semiconductor memory, an optical disk, a magnetic disk, or a magneto-optical disk.

### Description of the Background Art

Various data processors are now commercially available for performing a digital data recording process and/or a digital data playback process on a recording medium, such as a semiconductor memory, an optical disk, a magnetic disk, or a magneto-optical disk. Examples of a data processor for recording and/or playing back digital images and digital sounds include digital videocassette recorders, digital hard disk recorders, DVD video disk recorders, and BD video disk recorders. Such a data processor is briefly described below.

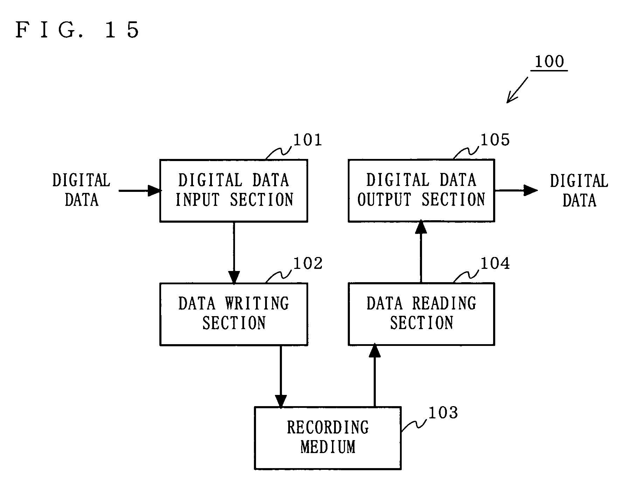

FIG. 15 is a block diagram illustrating a general outline of the configuration of a conventional data processor 100 generally used for recording and/or playing back digital data. The conventional data processor 100 illustrated in FIG. 15 includes a digital data input section 101, a data writing section 102, a recording medium 103, a data reading section 104, and a digital data output section 105.

Digital data supplied to the digital data input section 101 is subjected to data conversion at the data writing section 102 in accordance with the format of the recording medium 103, and is then recorded on the recording medium 10 3 . Also, the digital data recorded on the recording medium 103 is read by the data reading section 104, and is then output from the digital data output section 105.

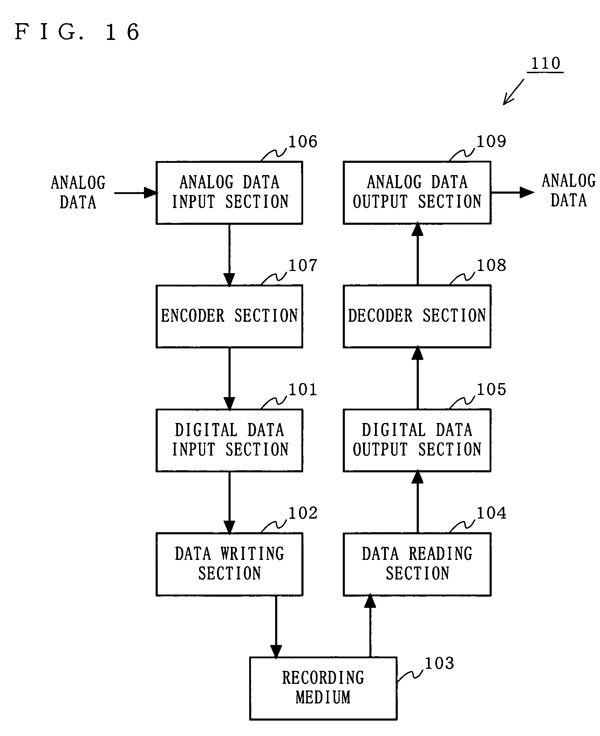

On the other hand, if supplied data is analog data, the analog data is first converted to digital data, and then reading/playback of the digital data is performed. FIG. 16 is a block diagram illustrating a general outline of the configuration of a conventional general data processor 110 supplied with analog data. The conventional data processor 110 illustrated in FIG. 16 includes the components of the conventional data processor 100 illustrated in FIG. 15 and further includes an analog data input section 106, an encoder section 107, a decoder section 108, and an analog data output section 109.

Analog data supplied to the analog data input section 106 is converted by the encoder section 107 to digital data, and is then supplied to the digital data input section 101. Also, the digital data output from the digital data output section 105 is converted by the decoder section 108 to analog data, and is then supplied to the analog data output section 109.

With the recent technological advances, data processors capable of simultaneously performing a data recording process and a data playback process (for example, data processors capable of time-shift playback) have emerged in order to further enhance convenience for customers. In such a data processor, a simultaneous data recording/playback function is achieved by using a scheme as described below (refer to Japanese Patent Laid-Open Publication No. 11-110916).

Normally, a maximum transfer rate at which a recording medium can be accessed at one time, that is, a maximum amount of data that can be written to or read from the recording medium per unit time, is limited by the capability of the recording medium. Therefore, in order to simultaneously perform a plurality of data processes, a total transfer rate of these data processes is required not to exceed this maximum transfer rate. For this reason, in the conventional data processor achieving the simultaneous data recording/playback function, the transfer rate for data recording and the transfer rate for data playback are fixedly assigned in advance. For example, when the maximum transfer rate is 50Mbps, a transfer rate of 25Mbps is assigned to data recording, while a transfer rate of 25Mbps is assigned to data playback.

In such a scheme performed by the conventional data processor of fixedly assigning the transfer rates, however, the maximum transfer rate is not effectively used when recording and playback are not simultaneously performed. In the above example, even when only data recording is performed, the transfer rate of 25Mbps is the limit available for data recording, and the remaining 25Mbps is not available. Therefore, in this case, a use efficiency of the maximum transfer rate is 50%, which is unsatisfactorily low.

### SUMMARY OF THE INVENTION

Therefore, an object of the present invention is to provide a data processor and data processing method allowing a plurality of data processes to be simultaneously performed at a high transfer rate use efficiency by dynamically changing a transfer rate assigned to each data process based on the number of data processes to be simultaneously performed.

The present invention is directed to a data processor for performing a digital data recording process and/or a digital data playback process on a recoding medium. In order to achieve the above object, the data processor of the present invention includes: a data accepting section, a transfer rate control section, and a data processing section.

The data accepting section can accept a plurality of data processes. The transfer rate control section controls assignment of transfer rates per unit time to the plurality of data processes accepted by the data accepting section so that a total of the transfer rates assigned to the plurality of data processes does not exceed a maximum transfer rate at which the recording medium can process data per unit time. The data processing section simultaneously performs the plurality of data processes on the recording medium in accordance with the transfer rates assigned by the transfer rate control section.

Typically, the transfer rate control section limits a transfer rate of at least one of the plurality of data processes when a new data process accepted by the data accepting section causes the total of the transfer rates for the plurality of the data processes to exceed the maximum transfer rate. The data process whose transfer rate is limited is determined based on a preset priority.

When the data process whose transfer rate is limited is a dubbing process in which data played back from the recording medium is recorded again on the recording medium, the transfer rate control section may limit a transfer rate for a playback process of the dubbing process to be equal to or different from a transfer rate for a recording process of the dubbing process. The data process whose transfer rate is limited is determined based on a preset priority.

The transfer rate can be limited to a different value by using a buffer for temporarily writing the digital data played back from the recording medium by the data processing section at a first transfer rate equal to a playback transfer rate, and reading the digital data at a second transfer rate different from the first transfer rate for input again to the data processing section. Alternatively, the transfer rate can be limited to a different value by using a decoder section for converting the digital data played back by the data processing section from the recording medium to analog data at a first transfer rate equal to a playback transfer rate and an encoder section for converting the analog data obtained through conversion by the decoder section to digital data at a second transfer rate different from the first transfer rate for input again to the data processing section.

Upon completion of an arbitrary data process, the transfer rate control section may remove an entire or part of limitations on the data process whose transfer rate is limited. The data process whose limitations are removed is determined based on a preset priority.

Also, the transfer rate control section may calculate a remaining time until completion of the data process whose transfer rate is limited and may present the remaining time to a user.

Furthermore, the present invention is directed to a data processing method for performing a digital data recording process and/or a digital data playback process on a recoding medium. In order to achieve the above object, the data processing method of the present invention includes the steps of: accepting a plurality of data processes; calculating a total of transfer rates required per unit time for the plurality of data processes accepted in the accepting step; controlling assignment of the transfer rates to the plurality of data processes so that the total of the transfer rates calculated in the calculating step does not exceed a maximum transfer rate at which the recording medium can process data per unit time; and simultaneously performing the plurality of data processes on the recording medium in accordance with the transfer rates assigned in the controlling step.

Typically, the above-mentioned data processing method is provided in a form of a program for causing a computer to perform a series of processes. This program may be introduced as being recorded on a computer-readable recording medium.

As described above, according to the present invention, the transfer rate assigned to each data process is dynamically changed so that the total of the transfer rates for the plurality of data processes is within the maximum transfer rate of the recording medium. Thus, even with a request for a new data process which would cause, if performed at its requested transfer rate, the total of the transfer rates to exceed the maximum transfer rate of the recording medium, the new data process and the data process currently being performed can be simultaneously performed. Also, as for the data process whose transfer rate has been temporarily reduced due to another data process being simultaneously performed, the transfer rate is automatically back to the original as soon as the transfer rate becomes reassignable. Thus, digital data recording can be achieved with higher quality.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram illustrating the configuration of a data processor 1 according to a first embodiment of the present invention;
FIG. 2 is an illustration showing one example of a data recording format of a recording medium 13;
FIG. 3 is an illustration showing one example of a management table held in a transfer rate control section 16;
FIG. 4 is an illustration showing one example of a priority decision table and a process decision table held in the transfer rate control section 16;
FIG. 5 is a flowchart for describing the procedure of a control process performed by the transfer rate control section 16;
FIGS. 6 and 7 are illustrations each exemplarily showing a state of transfer rates when a plurality of processes are performed;
FIG. 8 is a block diagram illustrating the configuration of a data processor 2 according to a second embodiment of the present invention;
FIG. 9 is an illustration showing a management table held in a transfer rate control section 26;
FIG. 10 is an illustration showing one example of a priority decision table and a process decision table held in the transfer rate control section 26;
FIG. 11 is a block diagram illustrating one example of a detailed configuration of a dubbing control section 27;
FIG. 12 is an illustration exemplarily showing a state of transfer rates when a plurality of processes are preformed;
FIG. 13 is a block diagram showing a configuration for achieving a mechanism for reporting the remaining time until the completion of dubbing to the user;
FIG. 14 is a block diagram illustrating the configuration of a data processor 3 according to a third embodiment of the present invention;
FIG. 15 is a block diagram illustrating the configuration of a conventional data processor 100; and
FIG. 16 is a block diagram illustrating the configuration of a conventional data processor 110.

### DESCRIPTION OF THE PREFERRED EMBODIMENTS

### (First embodiment)

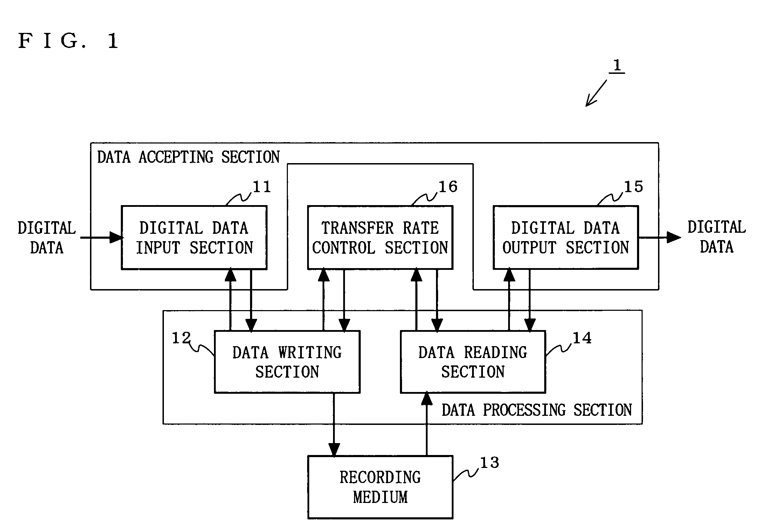

FIG. 1 is a block diagram illustrating the configuration of a data processor 1 according to a first embodiment of the present invention. In FIG. 1, the data processor 1 according to the first embodiment includes a digital data input section 11, a data writing section 12, a recording medium 13, a data reading section 14, a digital data output section 15, and a transfer rate control section 16. The digital data input section 11 and the digital data output section 15 form a data accepting section. The data writing section 12 and the data reading section 14 form a data processing section.

First, each component of the data processor 1 according to the first embodiment is schematically described below.

In response to a recording request given from a user or the like, the digital data input section 11 is supplied with digital data to be recorded and its related information, such as a file name and recording quality (bit rate). The digital data input section 11 then instructs the data writing section 12 to write the digital data. Upon reception of the recording instruction from the digital data input section 11, the datawriting section 12 writes the digital data on the recording medium 13 under the control of the transfer rate control section 16. This data writing section 12 is capable of simultaneously writing a plurality of pieces of digital data.

In response to a playback request given from the user or the like, the digital data output section 15 is supplied with information, such as a file name, related to digital data to be played back. The digital data output section 15 then instructs the data reading section 14 to play back the digital data. Upon reception of the playback request from the digital data output section 15, the data reading section 14 reads the digital data from the recording medium 13 under the control of the transfer rate control section 16. The digital data output section 15 outputs the digital data read (played back) by the data reading section 14. This data reading section 14 is capable of simultaneously reading a plurality of pieces of digital data.

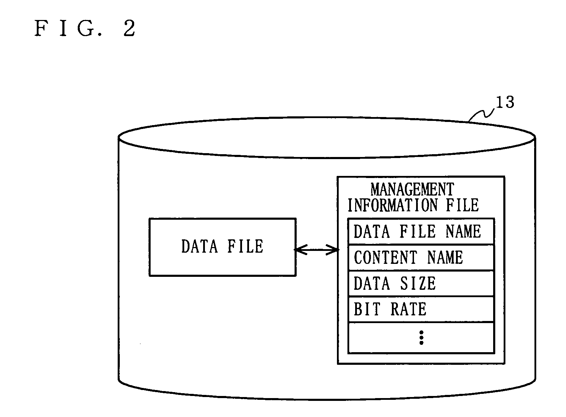

The recording medium 13 is a medium allowing digital data, such as videos and sounds, to be recorded thereon, and is implemented by, for example, a hard disk (HDD), a flash memory, a DVD medium, and a BD medium. On this recording medium 13, as illustrated in FIG. 2, the recorded digital data is managed as a data file, and its management information file is recorded in relation to the digital data. The management information file contains, for example, a data file name, a content name, a data size, a recording bit rate, and the like. The recording medium 13 may be implemented by a single medium or a plurality of media.

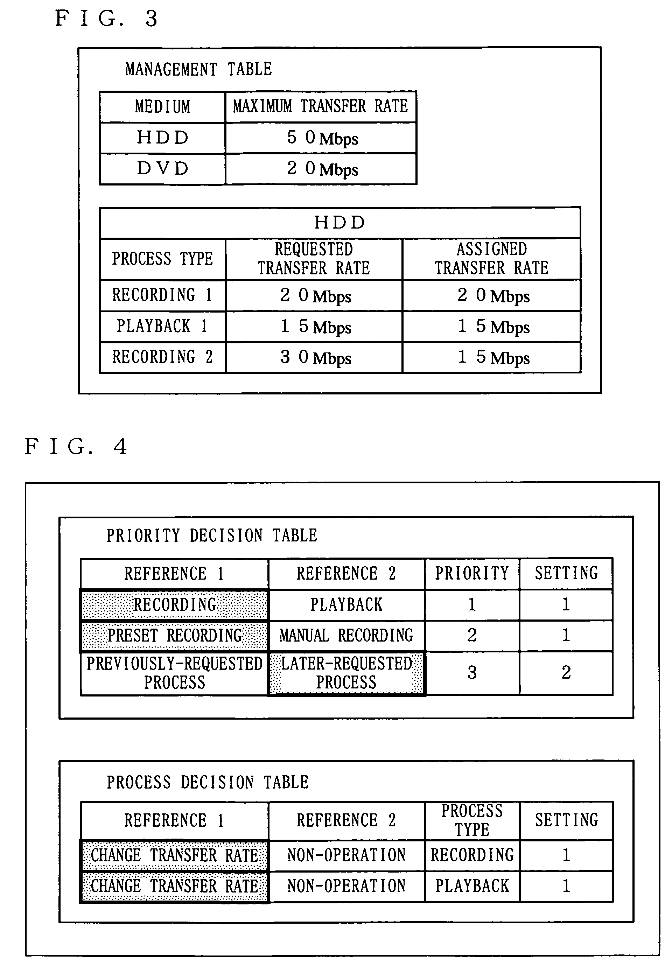

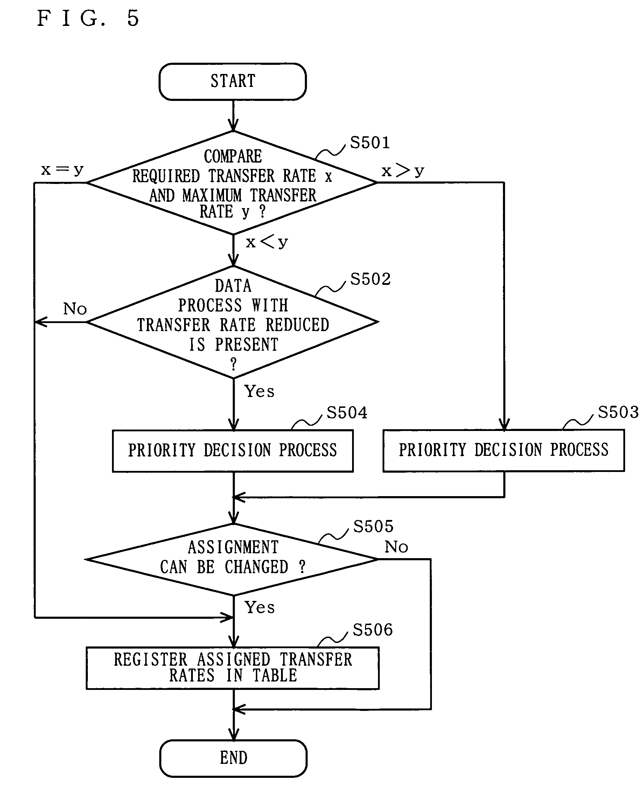

The transfer rate control section 16 performs control for optimally assigning a transfer rate (an amount of data transferred per unit time) used in each of recording and playback processes. This control is performed based on information regarding the state of all recording and playback processes to be performed by the data processor and information regarding a maximum transfer rate at which the recording medium 13 can be accessed at one time. FIG. 3 is an illustration showing one example of such information in a form of a management table. The management table in FIG. 3 includes a table containing a maximum transfer rate of the recording medium 13 and a table containing a requested transfer rate and an actually-assigned transfer rate for each type of the processes including recording and playback processes being currently performed. In the example of FIG. 3, the processes of Recording 1, Playback 1 and Recording 2 are requested on an HDD, and a total of transfer rates requested on the HDD is 65Mbps. Here, the transfer rate for Recording 2 is made small so that the total of the assigned transfer rates is equal to or smaller than the maximum transfer rate of 50Mbps of the recording medium 13. FIG. 4 is an illustration showing one example of a priority decision table and a process decision table to be used by the transfer rate control section 16 for deciding priority. This priority decision table contains information regarding priorities in transfer rate assignment. In the example of FIG. 4, a higher priority is given to processes shaded in the drawing, in the order of a recording process, a preset recording process, and then a later-requested process. Note that either one of Reference 1 and Reference 2 is applied depending on the specifications of the data processor or the like. The process decision table has set therein information as to whether to change the transfer rate for the process selected according to the priority decision.

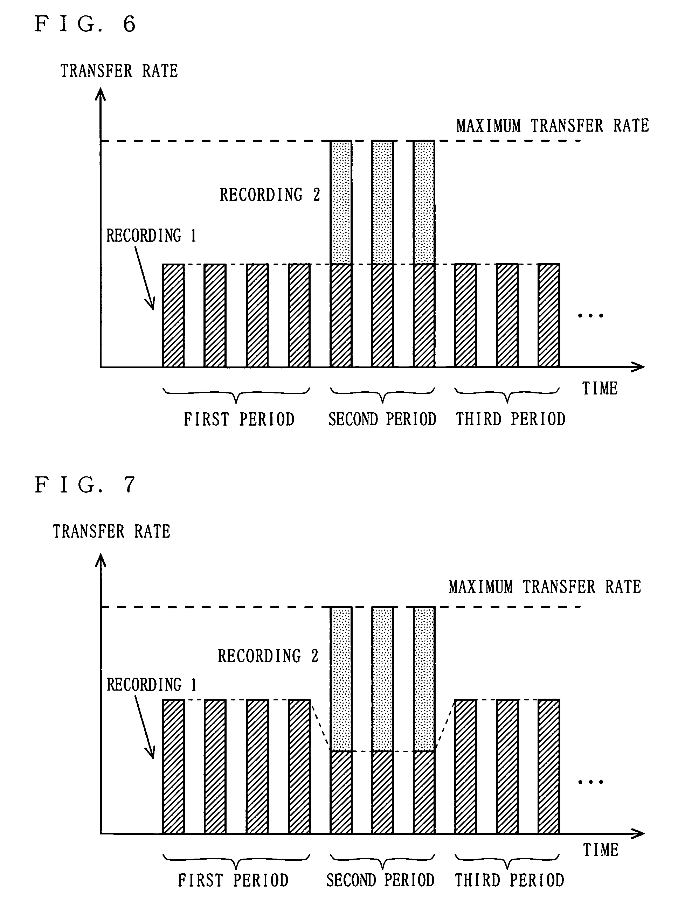

With further reference to FIGS. 5 through 7, a data processing method performed by the data processor of the present invention is described in detail below. FIG. 5 is a flowchart for describing the procedure of a control process performed by the transfer rate control section 16. FIGS. 6 and 7 are illustrations each showing a state of transfer rates when a plurality of processes are preformed.

The procedure illustrated in FIG. 5 is started upon reception by the transfer rate control section 16 of any one of the following: an inquiry from the data writing section 12 based on a recording instruction; an inquiry from the data reading section 14 based on a playback instruction; a report from the data writing section 12 that a recording process has been completed; and a report from the data reading section 14 that a playback process has been completed.

The transfer rate control section 16 compares a transfer rate x required for the recording process and/or the playback process to be performed with a maximum transfer rate *y* of the recording medium 13 (step S501). Here, in the case of receiving an inquiry, the required transfer rate x is a total of a transfer rate(s) assigned to the process(es) registered in the management table and a transfer rate requested by the inquiry. In the case of receiving a report, the required transfer rate x is obtained by subtracting the transfer rate for the completed process from the transfer rate(s) assigned to the process(es) registered in the management table. Note that the transfer rate requested by an inquiry regarding a playback process is given by a recording bit rate contained in the management information file recorded on the recording medium 13.

As a result of comparison in step S501, if the required transfer rate *x* coincides with the maximum transfer rate *y* (this happens only in the case of inquiry), the transfer rate control section 16 assigns the transfer rate requested by the inquiry as it is to the process, and then registers the transfer rate in the management table (*x* = *y* in step S501 and step S506). This occurs, for example, in a transition from a first period to a second period in FIG. 6. In FIG. 6, shaded rectangles each represent a transfer rate per unit time. The transfer rate control section 16 then sends, to the data writing section 12 or the data reading section 14 which sent the inquiry, a response indicating that the transfer rate has been assigned as requested. Such a response is also sent to the digital data input section 11 or the digital data output section 15.

As a result of comparison in step S501, if the required transfer rate x is larger than the maximum transfer rate y (this also happens only in the case of inquiry), the transfer rate control section 16 makes priority decision (*x* > *y* in step S501 and step S503). This priority decision is made in order to determine a data process to which a transfer rate different from a requested transfer rate can be assigned so that the required transfer rate x is within the maximum transfer rate *y*. The transfer rate control section 16 refers to the priority decision table to select a data process having the lowest priority. For example, in the case where a playback process and a manual recording process are being performed with the playback process started first, the playback process is selected as having the lowest priority based on the priority decision table exemplarily illustrated in FIG. 4. The transfer rate control section 16 then refers to the process decision table to determine whether the transfer rate assigned to the selected data process can be changed so that the required transfer rate x is within the maximum transfer rate *y* (step S505). For example, in the process decision table of FIG. 4, the transfer rate for the playback process is to be changed for playback. Therefore, in the above example, it is determined that the transfer rate can be changed.

If it is determined in step S505 that the assigned transfer rate cannot be changed, the transfer rate control section 16 sends, to the data writing section 12 or the data reading section 14 which sent the inquiry, a response indicating that the requested data process cannot be performed. On the other hand, if it is determined that the transfer rate can be changed, the transfer rate control section 16 changes (limits) the transfer rate for the selected data process and registers the changed transfer rate in the management table for update (step S506 ) . This occurs, for example, in a transition from a first period to a second period in FIG. 7. In FIG. 7, since two data processes are both recording processes, the subsequent data process is prioritized over the previous data process and the transfer rate assigned to the previous data process is changed (limited). The transfer rate control section 16 then sends, to the data writing section 12 or the data reading section 14 which sent the inquiry, a response indicating that the transfer rate assigned to the selected data process has been changed. Such a response is also sent to the digital data input section 11 or the digital data output section 15.

As a result of comparison in step S501, if the required transfer rate *x* is smaller than the maximum transfer rate *y,* the transfer rate control section 16 determines whether the data processes currently being performed include a data process to which a transfer rate different from the requested transfer rate has been assigned (*x* < *y* in step S501 and step S502). If no such data process assigned with a different rate is present, the transfer rate control section 16 assigns the transfer rate requested by the inquiry as it is or deletes the registration of the completed data process, and then registers as such in the management table (step S506). This occurs, for example, in a transition from the second period to a third period in FIG. 6. On the other hand, if such a data process assigned with a different rate is present, the transfer rate control section 16 makes priority decision as to this data process (step S504). The transfer rate control section 16 refers to the priority decision table to determine whether to change the transfer rate assigned to this data process. For example, if the priority assigned to this data process is higher than a predetermined level, it is determined to change the transfer rate. If the transfer rate is determined to be changed, the transfer rate control section 16 changes the transfer rate assigned to this data process so that the required transfer rate x is within the maximum transfer rate *y*, and then registers the changed transfer rate in the management table for update (step S506) . This occurs, for example, in a transition from the second period to a third period in FIG. 7. The transfer rate control section 16 then sends, to the data writing section 12 or the data reading section 14 which sent the inquiry, a response indicating that the transfer rate assigned to this data process has been changed. Such a response is also sent to the digital data input section 11 or the digital data output section 15.

As described above, according to the data processor of the first embodiment of the present invention, the transfer rate assigned to each data process is dynamically changed so that the total of the transfer rates for the plurality of data processes is within the maximum transfer rate of the recording medium. Thus, even with a request for a new data process which would cause, if performed at its requested transfer rate, the total of the transfer rates to exceed the maximum transfer rate of the recording medium, the new data process and the data process currently being performed can be simultaneously performed. Also, as for the data process whose transfer rate has been temporarily reduced due to another data process being simultaneously performed, the transfer rate is automatically back to the original as soon as the transfer rate becomes reassignable. Thus, digital data recording can be achieved with higher quality.

Also, in the above first embodiment, the transfer rate assigned to each data process is determined with an upper limit of 100% of the maximum transfer rate of the recording medium. Alternatively, in consideration of delay which might occur depending on the data processor in reading and writing due to access error or the like, the transfer rate assigned to each data process may be determined with an upper limit of a numerical value smaller than the maximum transfer rate of the recording medium (such as 90% or 80% of the maximum transfer rate).

### (Second embodiment)

In the above first embodiment, a plurality of data processes having control over transfer rate assignment are either recording processes or playback processes. In a second embodiment, described is a transfer rate assignment control when the data processes include a dubbing process. Note that the dubbing process herein means a data process in which a playback process and a recording process are simultaneously performed.

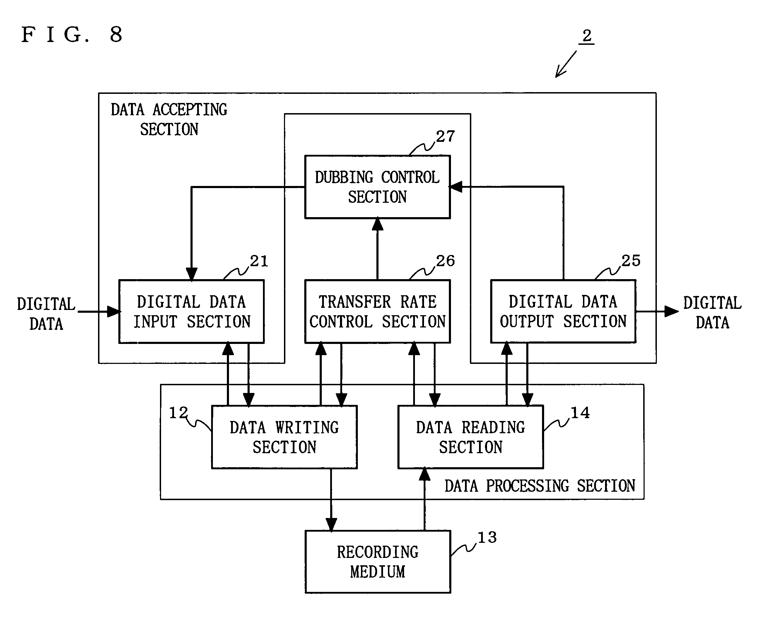

FIG. 8 is a block diagram illustrating the configuration of a data processor 2 according to the second embodiment of the present invention. In FIG. 8, the data processor 2 according to the second embodiment includes a digital data input section 21, the data writing section 12, the recording medium 13, the data reading section 14, a digital data output section 25, a transfer rate control section 26, and a dubbing control section 27. The digital data input section 21 and the digital data output section 25 form a data accepting section. As illustrated in FIG. 8, the data processor 2 according to the second embodiment is different from the data processor 1 according to the above first embodiment in that the digital data input section 21, the digital data output section 25, the transfer rate control section 26, and the dubbing control section 27 are further provided. Hereinafter, description is made to the data processor 2 according to the second embodiment, particularly to the above different point.

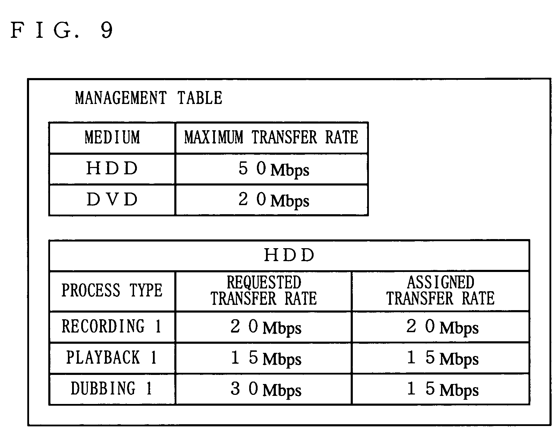

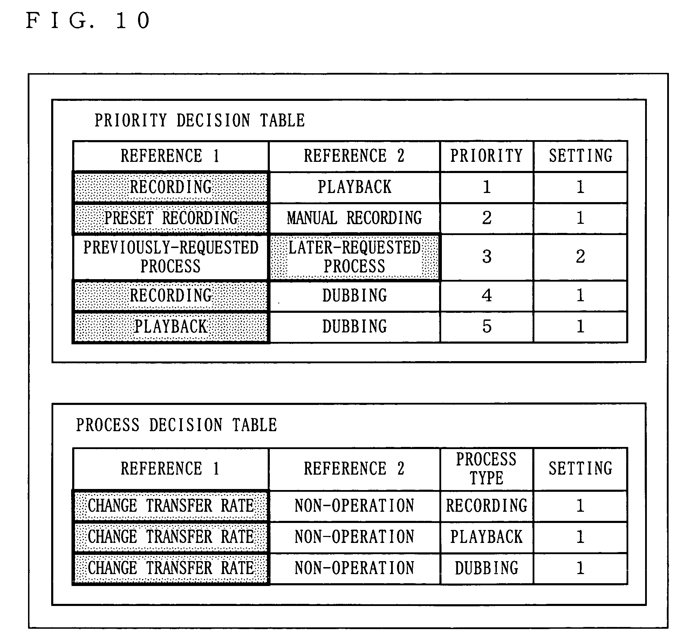

The transfer rate control section 26 performs control for optimally assigning transfer rates used in a recording process, a playback process, and a dubbing process. This control is performed based on information regarding the state of all recording, playback, and dubbing processes to be performed by the data processor and information regarding a maximum transfer rate at which the recording medium 13 can be accessed at one time. FIG. 9 is an illustration showing one example of such information in a form of a management table held by the transfer rate control section 26. The information contained in this management table has been described with reference to FIG. 3. In the example of FIG. 9, processes of Recording 1, Playback 1 and Dubbing 1 are requested on an HDD, and a total of transfer rates requested on the HDD is 65Mbps. Here, the transfer rate for Dubbing 1 is made small so that the total of the assigned transfer rates is equal to or smaller than the maximum transfer rate of 50Mbps of the recording medium 13. FIG. 10 is an illustration showing one example of a priority decision table and a process decision table to be used by the transfer rate control section 26 for deciding priority. The information contained in each of these tables has been described with reference to FIG. 4.

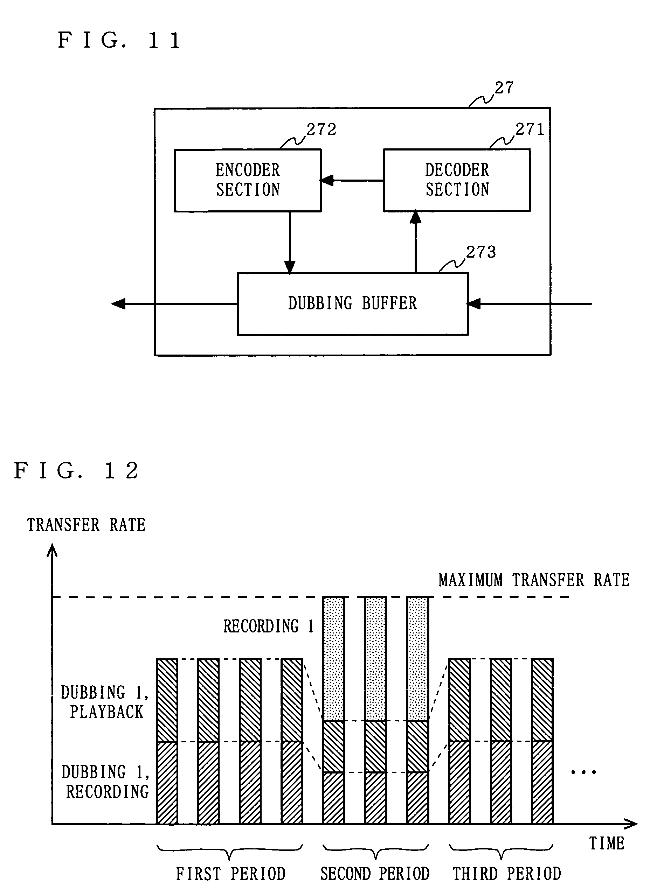

The dubbing control section 27 is supplied with digital data read from the recording medium 13 through the data reading section 14 and the digital data output section 25 at a transfer rate A equal to a reading transfer rate, and outputs the digital data to the digital data input section 21 at a predetermined transfer rate B. The predetermined transfer rate B is determined by assignment control performed by the transfer rate control section 26. Conversion from the transfer rate A to the transfer rate B can be performed on either digital data or analog data. In the case of digital data, a digital buffer capable of reducing the amount of digital data through a re-compression process or a decimation process is used, for example. In the case of analog data, the dubbing control section 27 having the structure as exemplarily illustrated in FIG. 11 is useful. The dubbing control section 27 illustrated in FIG. 11 includes a decoder section 271, an encoder section 272, and a dubbing buffer 273. Digital data output from the digital data output section 25 is supplied to the dubbing buffer 273 , and is then converted by the decoder section 271 to analog data at the transfer rate A. The analog data obtained through conversion is re-converted by the encoder section 272 to digital data at the transfer rate B. The digital data obtained through re-conversion is supplied via the dubbing buffer 273 to the digital data input section 21.

Next, further with reference to FIGS. 5 and 12, control performed by the transfer rate control section 26 is described in detail. FIG. 12 is an illustration exemplarily showing the state of transfer rates when a new data process which would cause, if performed at its requested transfer rate, the total of the transfer rates to exceed the maximum transfer rate *y* of the recording medium 13 is requested while a dubbing process is performed. In the example of FIG. 12, the dubbing process is a normal dubbing process not accompanied by digital data conversion, wherein a playback transfer rate is equal to a recording transfer rate.

Upon reception of an inquiry of a new data process from the data writing section 12, the transfer rate control section 26 compares a transfer rate x required for the dubbing process currently being performed and the new data process with the maximum transfer rate *y* of the recording medium 13 (step S501). Here, as a result of comparison, the required transfer rate *x* exceeds the maximum transfer rate *y*. Therefore, the transfer rate control section 26 makes priority decision ( *x > y* in step S501 and step S503). In the example of FIG . 10, the dubbing process has the lowest priority, and the transfer rate for the dubbing process is allowed to be changed. Therefore, the transfer rate control section 26 changes (limits) the transfer rate assigned to the dubbing process so that the required transfer rate *x* is within the maximum transfer rate *y* (step S505) . This occurs for example, in a transition from a first period to a second period in FIG. 12. Basically, the transfer rate control section 26 equally changes (limits) both of the transfer rates for playback and recording processes that are associated with the dubbing process. Therefore, a transfer rate z requested for the new data process is subtracted from the maximum transfer rate *y*, and then a half of the subtraction result is set as a transfer rate Cfor each of the playback and recording processes of the dubbing process (*C* = (*y* - *z*)/2).

With the above-described assignment process, the dubbing process and other processes can be simultaneously perf ormed. However, the dubbing process with its transfer rate being reduced takes longer time than usual to be completed due to a longer transfer time, although the quality of the dubbed data is kept. In order to mitigate this problem, a mechanism is provided in the second embodiment for notifying the user for convenience of the remaining time until the completion of the dubbing process whose transfer rate has been changed. This mechanism is described below.

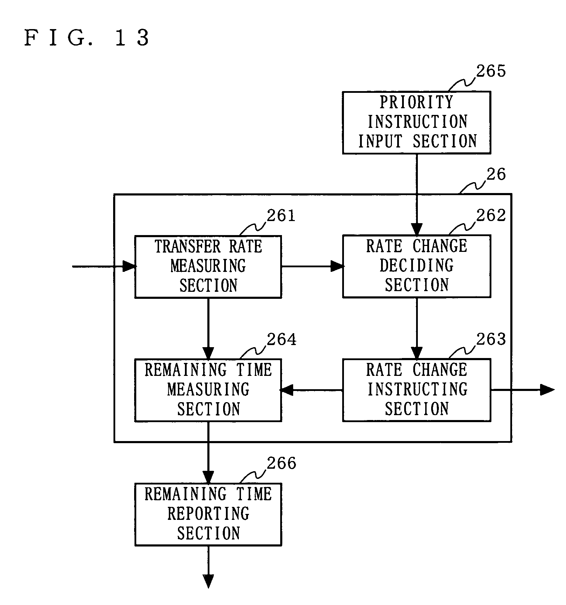

FIG. 13 is a block diagram illustrating the configuration for achieving the mechanism for notifying the user of the remaining time until the completion of the dubbing process. In FIG. 13, the configuration for achieving the mechanism includes a transfer rate measuring section 261, a rate change deciding section 262, a rate change instructing section 263, a remaining time measuring section 264, a priority instruction input section 265, and a remaining time reporting section 266. The transfer rate measuring section 261, the rate change deciding section 262, the rate change instructing section 263, and the remaining time measuring section 264 are included in the transfer rate control section 26.

The transfer rate measuring section 261 is supplied with a transfer rate for each data process to be performed. The rate change deciding section 262 refers to the management table, the priority decision table, and the process decision table to decide a data process whose transfer rate is to be changed. Here, an instruction from the user or the like as to a data process to be prioritized can be input through the priority instruction input section 265. Therefore, based on the instruction directly input from the priority instruction input section 265, the data process whose transfer rate is to be changed may be decided without the use of the priority decision table or the process decision table. The rate change instructing section 263 instructs the data writing section 12 and the data reading section 14 to change the transfer rate for the data process decided by the rate change deciding section 262. In the case of the dubbing process, the remaining time measuring section 264 obtains a total capacity of the digital data to be dubbed, and divides the total capacity by the assigned transfer rate, thereby calculating the remaining time until the completion of the dubbing process. The calculated remaining time is presented to the user through the remaining time reporting section 266.

As described above, according to the data processor of the second embodiment of the present invention, a plurality of data processes including a dubbing process can be performed.

Note that a data process to be simultaneously performed with the dubbing process may be any one of a recording process, a playback process, and another dubbing process. Also, the instruction input from the priority instruction input section 265 is not restricted to be provided only when a request for a data process is made, and may be provided at any time as required. This instruction may be explicitly provided through a remote controller or the like, or may be provided when preset recording is set, for example. Furthermore, the mechanism for reporting the remaining time until the completion of the dubbing process can be applied to amechanism for reporting the remaining time until the completion of the recording process or the remaining time until the completion of the playback process. Still further, the user may be notified of not only the remaining time but also the change in the transfer rate. The user may be notified, for example, through display on a screen, through display on a front panel of the data processor, or through audio guide.

### (Third embodiment)

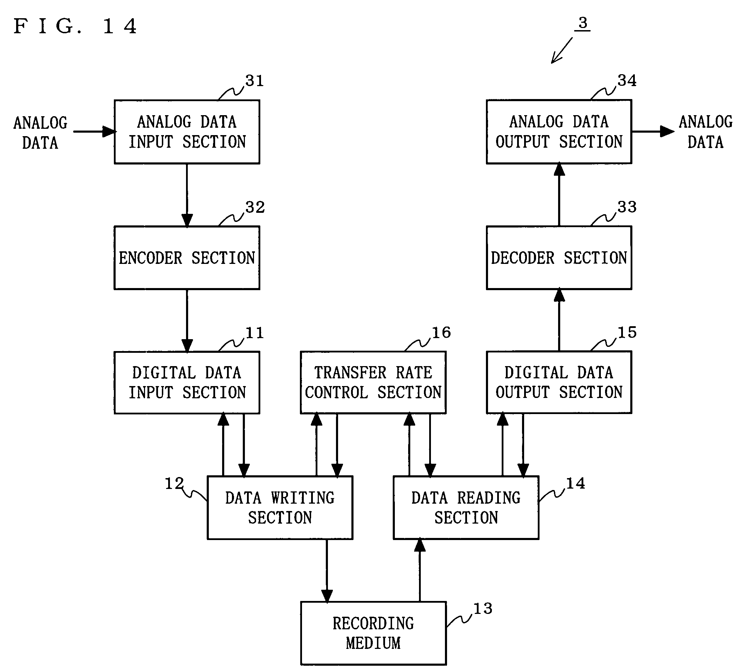

In the first and second embodiments, input data is digital data. With the structure described below being added to each embodiment, it is possible to support analog data inputs. FIG. 14 is a block diagram illustrating the configuration of a data processor 3 formed by modifying the configuration of the data processor 1 of FIG. 1 so as to support analog data. As illustrated in FIG. 14, in order to support analog data, an analog data input section 31 and an encoder section 32 are provided before the digital data input section 11, and a decoder section 33 and an analog data output section 34 are provided after the digital data output section 15.

The analog data input section 31 is supplied with analog data. The encoder section 32 converts the analog data supplied to the analog data input section 31 to digital data. The digital data obtained through conversion is supplied to the digital data input section 11. On the other hand, the decoder section 33 converts digital data output from the digital data output section 15 to analog data. The analog data obtained through conversion is output through the analog data output section 34.

With this configuration, the data processing method according to the present invention can be applied also to analog data. The same goes for the data processor 2 of FIG. 8.

Typically, the data processing method performed by the data processors described in the above first through third embodiments is achieved by a CPU interpreting predetermined program data which is stored in a storage device (ROM, RAM, a hard disk, or the like), and allows the above-described procedure to be performed. In this case, the program data may be introduced to the storage device through a recording medium, such as a CD-ROM or a flexible disk, or may be directly executed from the recording medium.

While the invention has been described in detail, the foregoing description is in all aspects illustrative and not restrictive. It is understood that numerous other modifications and variations can be devised without departing from the scope of the invention.

## Claims

1. A data processor for performing a digital data recording process and/or a digital data playback process on a recoding medium, comprising:
a data accepting section (11, 15, 21, 25) for accepting a plurality of data processes;
a transfer rate control section (16, 26) for controlling assignment of transfer rates per unit time to the plurality of data processes accepted by the data accepting section (11, 15, 21, 25) so that a total of the transfer rates assigned to the plurality of data processes does not exceed a maximum transfer rate at which the recording medium (13) can process data per unit time; and
a data processing section (12, 14) for simultaneously performing the plurality of data processes on the recording medium (13) in accordance with the transfer rates assigned by the transfer rate control section (16, 26).

2. The data processor according to claim 1, wherein
the transfer rate control section (16, 26) limits a transfer rate of at least one of the plurality of data processes when a new data process accepted by the data accepting section (11, 15, 21, 25) causes the total of the transfer rates for the plurality of the data processes to exceed the maximum transfer rate.

3. The data processor according to claim 2, wherein
the data process whose transfer rate is limited is a dubbing process in which digital data played back from the recording medium (13) is recorded again on the recording medium (13), and
the transfer rate control section (26) limits a transfer rate for a playback process of the dubbing process to be equal to a transfer rate for a recording process of the dubbing process.

4. The data processor according to claim 2, wherein
the data process whose transfer rate is limited is a dubbing proces s in which digital data played back from the recording medium (13) is recorded again on the recording medium (13), and
the transfer rate control section (26) limits a transfer rate for a playback process of the dubbing process to be different from a transfer rate for a recording process of the dubbing process.

5. The data processor according to claim 4, further comprising
a buffer (273) for temporarily writing the digital data played back from the recording medium (13) by the data processing section (12, 14) at a first transfer rate equal to a playback transfer rate, and reading the digital data at a second transfer rate different from the first transfer rate for input again to the data processing section (12, 14).

6. The data processor according to claim 4, further comprising:
a decoder section (271) for converting the digital data played back by the data processing section (12, 14) from the recording medium (13) to analog data at a first transfer rate equal to a playback transfer rate; and
an encoder section (272) for converting the analog data obtained through conversion by the decoder section (271) to digital data at a second transfer rate different from the first transfer rate for input again to the data processing section (12, 14).

7. The data processor according to claim 2, wherein
upon completion of an arbitrary data process, the transfer rate control section (16, 26) removes an entire or part of limitations on the data process whose transfer rate is limited.

8. The data processor according to claim 3, wherein
upon completion of an arbitrary data process, the transfer rate control section (26) removes an entire or part of limitations on the data process whose transfer rate is limited.

9. The data processor according to claim 4, wherein
upon completion of an arbitrary data process, the transfer rate control section (26) removes an entire or part of limitations on the data process whose transfer rate is limited.

10. The data processor according to claim 2, wherein
the data process whose transfer rate is limited is determined based on a preset priority.

11. The data processor according to claim 3, wherein
the data process whose transfer rate is limited is determined based on a preset priority.

12. The data processor according to claim 4, wherein
the data process whose transfer rate is limited is determined based on a preset priority.

13. The data processor according to claim 7, wherein
the data process whose limitations are removed is determined based on a preset priority.

14. The data processor according to claim 8, wherein
the data process whose limitations are removed is determined based on a preset priority.

15. The data processor according to claim 9, wherein
the data process whose limitations are removed is determined based on a preset priority.

16. The data processor according to claim 2, wherein
the transfer rate control section (26) calculates a remaining time until completion of the data process whose transfer rate is limited and presents the remaining time to a user.

17. The data processor according to claim 3, wherein
the transfer rate control section (26) calculates a remaining time until completion of the data process whose transfer rate is limited and presents the remaining time to a user.

18. The data processor according to claim 4, wherein
the transfer rate control section (26) calculates a remaining time until completion of the data process whose transfer rate is limited and presents the remaining time to a user.

19. A data processing method for performing a digital data recording process and/or a digital data playback process on a recoding medium, comprising the steps of:
accepting a plurality of data processes;
calculating a total of transfer rates required per unit time for the plurality of data processes accepted in the accepting step;
controlling assignment of the transfer rates to the plurality of data processes so that the total of the transfer rates calculated in the calculating step does not exceed a maximum transfer rate at which the recording medium can process data per unit time; and
simultaneously performing the plurality of data processes on the recording medium in accordance with the transfer rates assigned in the controlling step.

20. A computer-readable program for causing a computer to perform a data processing method for performing a digital data recording process and/or a digital data playback process on a recoding medium, the program comprising the steps of:
accepting a plurality of data processes;
calculating a total of transfer rates required per unit time for the plurality of data processes accepted in the accepting step;
controlling assignment of the transfer rates to the plurality of data processes so that the total of the transfer rates calculated in the calculating step does not exceed a maximum transfer rate at which the recording medium can process data per unit time; and
simultaneously performing the plurality of data processes on the recording medium in accordance with the transfer rates assigned in the controlling step.

21. A recording medium having recorded therein a computer-readable program for causing a computer to perform a data processing method for performing a digital data recording process and/or a digital data playback process on a recoding medium, the program comprising the steps of:
accepting a plurality of data processes;
calculating a total of transfer rates required per unit time for the plurality of data processes accepted in the accepting step;
controlling assignment of the transfer rates to the plurality of data processes so that the total of the transfer rates calculated in the calculating step does not exceed a maximum transfer rate at which the recording medium can process data per unit time; and
simultaneously performing the plurality of data processes on the recording medium in accordance with the transfer rates assigned in the controlling step.
